(19) Europäisches Patentamt
European Patent Office
Office européen des brevets

(11) EP 1 527 022 B1

(12) **FASCICULE DE BREVET EUROPEEN**

(45) Date de publication et mention
de la délivrance du brevet:
**08.03.2006 Bulletin 2006/10**

(21) Numéro de dépôt: **03756525.6**

(22) Date de dépôt: **05.08.2003**

(51) Int Cl.:
**C02F 11/02** *(2006.01)*     **C02F 3/12** *(2006.01)*

(86) Numéro de dépôt international:
**PCT/FR2003/002469**

(87) Numéro de publication internationale:
**WO 2004/014809 (19.02.2004 Gazette 2004/08)**

(54) **PROCEDE ET INSTALLATION DE TRAITEMENT DES BOUES PROVENANT DES INSTALLATIONS D EPURATION BIOLOGIQUE DES EAUX**

VERFAHREN UND VORRICHTUNG ZUR BEHANDLUNG VON SCHLÄMMEN AUS ANLAGEN FÜR BIOLOGISCHE ABWASSERREINIGUNG

METHOD AND FACILITY FOR TREATMENT OF SLUDGE DERIVED FROM BIOLOGICAL WATER PURIFICATION FACILITIES

(84) Etats contractants désignés:
**AT BE BG CH CY CZ DE DK EE ES FI FR GB GR HU IE IT LI LU MC NL PT RO SE SI SK TR**

(30) Priorité: **05.08.2002 FR 0209969**

(43) Date de publication de la demande:
**04.05.2005 Bulletin 2005/18**

(73) Titulaire: **OTV S.A.**
**94417 Saint-Maurice Cédex (FR)**

(72) Inventeurs:
• CHAUZY, Julien
  **F-21140 Semur-en-Auxois (FR)**
• PATRIA, Lucie
  **F-75020 Paris (FR)**
• CRETENOT, Didier
  **F-60300 Senlis (FR)**

(74) Mandataire: **Larcher, Dominique**
**Cabinet Vidon,**
**16 B, rue Jouanet,**
**B.P. 90333,**
**Technopole Atalante**
**35703 Rennes Cédex 7 (FR)**

(56) Documents cités:
**EP-A- 0 924 168**     **FR-A- 2 276 269**
**US-A- 3 300 401**     **US-A- 4 370 235**
**US-A- 5 651 891**

**Description**

L'invention concerne le domaine du traitement biologique des effluents en vue de leur épuration, tels que notamment, mais non exclusivement les eaux usées urbaines ou industrielles. Plus précisément, l'invention concerne le traitement des boues issues du traitement biologique de ces effluents.

De tels procédés de traitement biologique consistent à mettre en contact l'effluent à épurer avec une biomasse permettant de dégrader la pollution contenue dans celui-ci. La mise en oeuvre de tels traitements conduit à une augmentation progressive de la quantité de biomasse et à la nécessité d'évacuer la biomasse en excès. Cette biomasse en excès est ci-après désignée par les termes "boues en excès".

Un des problèmes importants suscités par le traitement biologique des effluents est constitué par les quantités sans cesse croissantes de ces boues en excès.

Diverses solutions techniques ont été imaginées pour réduire ces quantités.

Parmi ces techniques, on peut notamment citer l'incinération, le séchage, l'oxydation par voie humide (OVH), le traitement chimique et biologique afin d'obtenir des produits valorisables en agriculture, la digestion c'est-à-dire essentiellement la méthanisation (ou digestion anaérobie), la stabilisation aérobie thermophile ou encore l'utilisation de champignons.

La méthanisation et la digestion aérobie thermophile permettent de réduire le volume des boues en excès en dégradant une partie des matières volatiles (MV) qu'elles contiennent. Cette dégradation peut atteindre 50 % de la quantité initiale des boues. Outre la réduction de ces matières volatiles, ces procédés conduisent à une digestion et à une hygiénisation des boues en excès.

Il a déjà été proposé dans l'état de la technique d'accroître l'efficacité de la digestion des boues en faisant subir à celles-ci une étape de traitement préliminaire.

A titre de traitement préliminaire, il a ainsi été proposé de faire subir aux dites boues, par exemple, un broyage mécanique en amont d'un digesteur anaérobie ou encore un traitement par ultrasons.

Ces traitements préliminaires permettent de réduire le temps de séjour des boues dans les digesteurs tout en maintenant une réduction des matières volatiles de la boue importante. Toutefois, de tels pré-traitements conduisent au mieux à éliminer 60% des matières volatiles des boues, d'où la nécessité d'éliminer les boues en excès résiduelles après digestion. De plus, ils nécessitent la mise en oeuvre de dispositifs relativement coûteux.

Une autre solution, basée sur l'action de l'ozone, a également été proposée. Ainsi, par exemple, le procédé décrit dans la demande de brevet européen EP-A-0 645 347, propose de faire agir de l'ozone sur la liqueur mixte recirculée dans le bassin biologique afin de réduire la production de boues en excès. L'inconvénient principal de cette technique résulte des difficultés inhérentes à l'utilisation du réactif très oxydant qu'est l'ozone, ainsi que de son coût de mise en oeuvre.

L'objectif principal de la présente invention est de proposer un procédé de traitement des boues en excès provenant du traitement biologique des effluents permettant le cas échéant de réduire considérablement la production de boues en excès.

Cet objectif est atteint grâce à l'invention qui a pour objet un procédé de traitement des boues en excès provenant d'au moins une installation de traitement d'épuration biologique d'effluents conduisant à la production de boues en excès, du type comprenant au moins une étape de solubilisation et au moins une étape de digestion desdites boues, caractérisé en ce qu'il comprend au moins une étape de séparation liquide/solide desdites boues solubilisées à l'issue de laquelle la fraction liquide subit au moins partiellement une étape de digestion avant d'être envoyée en amont dudit traitement biologique desdites effluents, tandis que la fraction solide des boues solubilisées est ré-acheminée vers ladite étape de solubilisation desdites boues.

Grâce au procédé selon l'invention, les temps de digestion sont considérablement réduits. En effet, la digestion de la seule phase liquide nécessite une durée de l'ordre de la journée alors que cette durée serait de l'ordre de 15 à 20 jours si elle devait être digérée, mélangée à la phase solide. Une telle durée de digestion serait effectivement nécessaire pour permettre l'hydrolyse des matières sèches contenues dans les boues.

Par ailleurs, la digestion de la seule phase liquide implique de façon avantageuse que l'équipement nécessaire à la digestion peut être de dimensions plus réduites, car le temps de séjour nécessaire à la mise en oeuvre des réactions sur la DCO soluble est plus faible que celui nécessaire pour la dégradation de la DCO particulaire.

De plus, le digesteur traite une phase contenant relativement peu de matières sèches, ce qui contribue à réduire les coûts d'équipements et d'exploitation en ayant la possibilité de recourir à un digesteur de plus faible capacité par rapport à un digesteur devant traiter de plus gros volumes comprenant des taux importants de matières sèches.

On notera que, dans le cas de la présente description, on entend le terme "digestion" comme visant tout procédé connu de l'homme de l'art de dégradation des boues par une biomasse. Ce terme inclut notamment :

- la digestion anaérobie, aussi appelée méthanisation, qui dégrade les molécules organiques des boues en $CO_2$, $CH_4$, et $NH_4$; la digestion anaérobie peut être mésophile, c'est-à-dire effectuée à une température allant de 30°C à 37°C, ou thermophile, c'est-à-dire effectuée à une température supérieure ;
- la stabilisation aérobie thermophile menée à une température comprise entre 45°C et 70°C, préférentiellement entre 50°C et 65°C qui consiste en une oxydation biologique effectuée par injection d'air dans une cuve agitée.

Selon une solution variante, le procédé comprend une étape intermédiaire complémentaire de solubilisation de ladite fraction solide, en amont de l'envoi à ladite étape de solubilisation desdites boues. Cette étape complémentaire de solubilisation utilise préférentiellement un moyen de solubilisation différent de celui utilisé dans l'étape principale de solubilisation desdites boues, afin d'améliorer la solubilisation par emploi de moyens complémentaires. C'est ainsi que si l'étape de solubilisation desdites boues utilise l'hydrolyse thermique comme moyen de solubilisation, l'étape intermédiaire de solubilisation de ladite fraction solide pourra utiliser un moyen de solubilisation mécanique (tel que ultrasons ou broyage) ou chimique (telle que ozone, ou acide par exemple).

De cette façon, le procédé permet de réduire encore, voire de supprimer complètement la production de boue.

Selon une solution avantageuse, le procédé comprend une étape d'épaississement desdites boues, voire de déshydratation, en amont de ladite étape principale de solubilisation desdites boues.

Dans ce cas, la surverse de ladite étape d'épaississement est préférentiellement envoyée en amont dudit traitement biologique desdits effluents.

Un tel épaississement des boues contribue à optimiser l'étape de solubilisation.

Avantageusement, ladite étape d'épaississement est réalisée avec ajout d'un polymère.

L'emploi d'un polymère permet en effet d'améliorer l'épaississement des boues.

L'épaississement peut être éventuellement remplacé par une déshydratation des boues, qui sera notamment possible lorsque l'étape de solubilisation prévue sera l'hydrolyse thermique.

Selon une solution préférée, ladite étape de solubilisation comprend au moins une des étapes appartenant au groupe suivant:

- hydrolyse thermique oxydante ou non (on entend par hydrolyse thermique, la solubilisation de la matière organique particulaire sous l'action de la chaleur. Cette hydrolyse peut être effectuée en présence ou non d'un oxydant) ;
- hydrolyse chimique (par acide, par base, par ozone ou par peroxyde d'hydrogène) ;
- hydrolyse biologique ;
- hydrolyse enzymatique ;
- traitement aux ultrasons ;
- broyage ;
- électroporation.

On note que plusieurs de ces techniques peuvent être combinées pour conduire à une réduction encore plus importante des boues.

Selon une solution préférée, ladite étape hydrolyse thermique est conduite à une température comprise entre 50° C et 180° C et à une pression comprise entre 2 et 40 bar.

Préférentiellement, ladite étape d'hydrolyse thermique est conduite à une température d'environ 175° C et à une pression d'environ 15 bar.

On notera également que les conditions de température et de pression préconisées par la présente invention pour l'étape d'hydrolyse thermique sont nettement moins sévères que les conditions généralement rencontrées dans des réactions d'oxydation par voie humide (appelée OVH) pour laquelle on met en oeuvre habituellement des températures comprises entre 180° et 300°C et des pressions allant jusqu'à 120 bar avec, comme objectif, la destruction de la matière organique. Ces conditions permettent d'inactiver la biomasse de façon à casser la membrane cellulaire et de solubiliser le liquide cellulaire ainsi libéré, mais de façon surprenante sans provoquer la formation en quantités conséquentes de résidus minéraux insolubles (oxydes, carbonates, sulfates, etc.) qui ne pourraient pas être éliminés lors de l'étape de digestion et qui gênerait le fonctionnement de cette étape et limiterait ainsi les possibilités de réduction de la quantité de boues à évacuer.

Avantageusement, ladite étape d'hydrolyse thermique est effectuée pendant une durée comprise entre 10 et 180 minutes. Préférentiellement, ladite étape d'hydrolyse thermique est effectuée pendant une durée d'environ 30 minutes.

Toutefois, l'étape d'hydrolyse thermique préconisée ci-dessus pourra être mise en oeuvre pendant un temps de traitement variable en fonction notamment de l'effluent à traiter.

Avantageusement, ladite étape d'hydrolyse thermique oxydante est réalisée à l'aide d'au moins un des agents oxydants appartenant au groupe suivant :

- l'air ;
- l'oxygène ;

- l'air enrichi en oxygène ;
- le péroxyde d'hydrogène ;
- l'ozone.

Selon un premier mode de réalisation, ladite étape de digestion est du type anaérobie.

Selon un deuxième mode de réalisation, ladite étape de digestion est du type aérobie.

Selon l'un ou l'autre mode de réalisation, ladite étape de digestion est du type mésophile.

Selon une alternative, ladite étape de digestion est du type thermophile.

Dans l'un ou l'autre cas, ladite étape de digestion est avantageusement réalisée à l'aide de cultures libres et/ou fixées.

Avantageusement, ladite étape de digestion est effectuée pendant une durée comprise entre 1 jour et 20 jours. Préférentiellement, ladite étape de digestion est effectuée pendant une durée comprise entre 1 jour et 5 jours.

En effet, grâce au procédé selon l'invention, le temps nécessaire à l'étape de digestion peut être considérablement réduit en étant de l'ordre de quelques jours, voire seulement de l'ordre de la journée, contrairement à la durée qui serait nécessaire pour digérer directement les boues solubilisées, qui serait alors voisine de 20 jours.

Selon une solution préférée, ladite étape de séparation liquide/solide est réalisée par centrifugation et/ou par filtration et/ou par égouttage et/ou par décantation.

On obtient ainsi de bien meilleurs résultats que par d'autres techniques, en particulier par rapport à une décantation.

Préférentiellement, ladite étape de séparation liquide/solide est réalisée avec ajout d'un floculant.

On notera aussi que, selon une variante de l'invention, le traitement biologique est associé à une technique séparative à membranes.

Un tel ajout contribue à améliorer l'efficacité de la centrifugation.

L'invention concerne également une installation pour la mise en oeuvre d'un procédé tel que décrit ci-dessus, comprenant une unité d'épuration biologique d'effluents, caractérisée en ce qu'elle comprend :

- au moins une unité de solubilisation desdites boues;
- au moins une unité de séparation liquide/solide en aval de ladite unité de solubilisation ;
- au moins un digesteur,

et en ce qu'elle comprend :

- des moyens d'acheminement de la fraction liquide issue de ladite unité de séparation liquide/solide vers ledit digesteur ;
- des moyens d'acheminement de la fraction solide issue de ladite unité de séparation liquide/solide vers ladite unité de solubilisation desdites boues ;
- des moyens d'acheminement de ladite fraction liquide digérée vers ladite unité de traitement biologique desdits effluents.

Selon une solution avantageuse, ladite unité de séparation liquide/solide comprend l'un au moins des moyens suivants :

- filtre presse ;
- centrifugeuse ;
- table ou vis d'égouttage ;
- membrane ;
- décanteur.

Préférentiellement, ladite unité de solubilisation comprend au moins une unité d'hydrolyse thermique.

On note que cette unité d'hydrolyse thermique oxydante pourra être remplacée ou combinée avec d'autres techniques de solubilisation telles qu'une hydrolyse thermique non oxydante, une hydrolyse chimique, une hydrolyse biologique, une hydrolyse enzymatique, un traitement aux ultrasons ou encore un broyage.

Selon un premier mode de réalisation, ladite unité de solubilisation comprend un réacteur agité.

Selon un deuxième mode de réalisation, ladite unité de solubilisation comprend un réacteur non agité.

Dans l'un ou l'autre mode de réalisation, ledit digesteur est du type à cultures fixées et/ou libres.

On comprend donc que la digestion pourra être de l'un ou de l'autre type, et peut également être du type mixte.

Selon une première variante, ledit digesteur est du type à garnissage ordonné.

Selon une autre variante, ledit digesteur est du type à garnissage en vrac.

Préférentiellement, ledit digesteur est du type UASB à granules.

Selon une solution avantageuse, l'installation comprend au moins un épaississeur desdites boues en amont de ladite unité de solubilisation.

Dans ce cas, l'installation comprend des moyens d'acheminement de la surverse dudit épaississeur sur ladite unité d'épuration biologique desdits effluents.

Avantageusement, l'installation comprend une unité intermédiaire de solubilisation de ladite fraction solide, en amont de ladite unité de solubilisation desdites boues incluant un moyen de solubilisation différent de celui utilisé dans l'unité de solubilisation desdites boues.

D'autres caractéristiques et avantages de l'invention apparaîtront plus clairement à la lecture de la description suivante de deux modes de réalisation d'une installation permettant la mise en oeuvre d'un procédé selon l'invention et de tests réalisés à l'aide de cette installation, ainsi que des dessins annexés parmi lesquels :

- la figure 1 représente une installation dans laquelle les boues en excès sont directement solubilisées avant d'être dirigées vers l'unité de séparation liquide/solide ;
- la figure 2 représente un deuxième mode de réalisation d'une installation selon l'invention selon laquelle les boues en excès sont préalablement épaissies ou déshydratées avant d'être solubilisées.
- Les figures 3 et 4 reprennent les 2 premiers modes de réalisation d'une installation selon l'invention selon laquelle la fraction solide des boues en excès solubilisées subit une autre solubilisation par un moyen, de préférence, différent de celui utilisé précédemment.

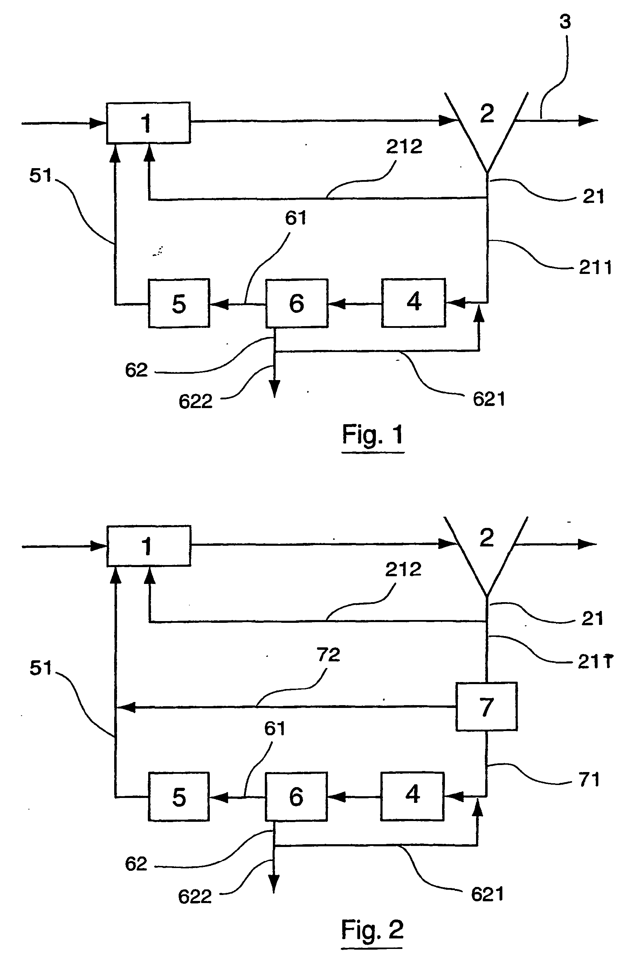

L'installation représentée à la figure 1 a été utilisée pour traiter des boues en excès provenant d'une installation de traitement biologique 1 selon, par exemple, le procédé dit des boues activées. L'installation de traitement biologique ne se limite pas aux boues activées mais s'applique aussi aux procédés combinant les procédés biologiques et les techniques séparatives par membranes, qu'elles soient de type à membranes immergées ou non (procédé connu sous le nom de bioréacteurs à membranes), aux procédés à cultures fixées, aux procédés à cultures mixtes ....

Selon une variante, ladite installation comprend également des moyens de séparation sur membranes (microfiltration, ultrafiltration, nanofiltration).

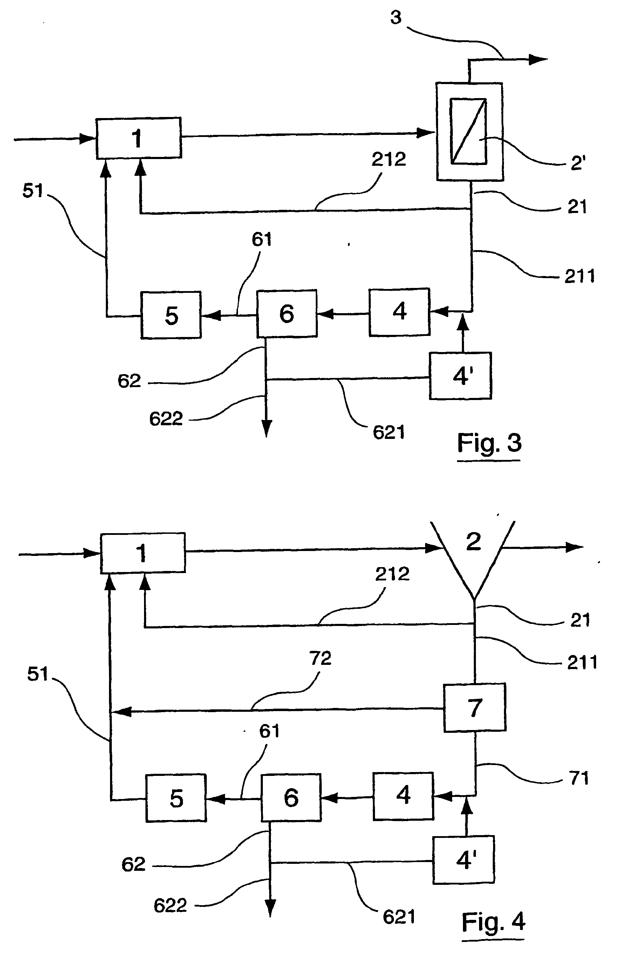

Classiquement, l'installation de traitement biologique est couplée à un clarificateur 2 en sortie duquel on récupère l'eau traitée par une canalisation 3. On notera que, dans un autre mode de réalisation représenté à la figure 3, ce clarificateur peut intégrer des membranes.

Cette installation comprend également une unité d'hydrolyse thermique 4 des boues en excès, provenant du clarificateur 2 par une canalisation 21, et un digesteur 5.

Selon l'invention, les boues en excès solubilisées par l'unité d'hydrolyse thermique 4 sont acheminées vers une unité de séparation liquide/solide 6 qui sépare les boues solubilisées en une fraction liquide acheminée par une canalisation 61 et une fraction solide 62. Cette unité de séparation liquide/solide 6 comprend une étape de déshydratation, par exemple une centrifugation.

La fraction liquide est acheminée vers le digesteur 5 par une canalisation 61 avant d'être reconduite vers l'installation de traitement biologique 1 par une canalisation 51, tandis que la phase solide est réacheminée vers l'unité d'hydrolyse thermique 4 par une canalisation 621.

Par ailleurs, une conduite 212 est prévue pour reconduire une partie des boues en excès provenant du clarificateur 2 directement vers l'installation de traitement biologique 1.

On note que des extractions de la phase solide provenant de la canalisation 62 à partir de l'unité de séparation liquide/solide 6 peuvent être effectuées à l'aide de moyens d'extraction 622.

Selon un deuxième mode de réalisation illustré par la figure 2, l'installation comprend, outre les moyens identiques ou similaires à ceux décrits en référence à la figure 1, un épaississeur 7 des boues en excès acheminées par la canalisation 211.

L'épaississeur 7 est constitué par une vis d'épaississement couplé à des moyens d'ajout d'un polymère en amont de la vis.

Selon ce mode de réalisation, la surverse de l'épaississeur est acheminée par une canalisation 72 vers l'installation de traitement biologique ou vers la digestion 5, tandis que la sousverse est dirigée vers l'unité d'hydrolyse thermique 4 par une canalisation 71.

On note que selon des variantes du premier et/ou du deuxième mode de réalisation qui viennent d'être décrits, il peut être prévu une unité de solubilisation 4' de la phase solide provenant de l'unité de séparation 6 et acheminée par la canalisation 621 vers l'unité d'hydrolyse thermique 4.

Cette unité 4' utilise préférentiellement des moyens différents de ceux utilisés par l'unité 4. Ces variantes sont représentées aux figures 3 et 4.

Des essais ont été conduits selon le processus opératoire de l'installation décrit en référence à la figure 2. Les résultats sont exposés ci-après.

Les essais ont été réalisés avec des boues provenant d'une station de traitement des eaux résiduaires urbaines, équipée d'un bassin biologique fonctionnant en aération prolongée. Ces boues ont une concentration de 4-5 g MES/L avant épaississement.

L'épaississement est réalisé à l'aide d'une vis d'épaississement, avec ajout de polymère en amont (5-6 Kg de polymère par tonne de MS). La qualité des boues épaissies obtenues est la suivante :

| | |
|---|---|
| Matières sèches MS (g/L) | 35-50 |
| Matières en suspension MES (g/L) | 34-49 |
| DCO totale (mg 02/L) | 35000-50000 |
| DCO soluble (mg 02/L) | 800-1000 |
| Azote total soluble (mg/L) | 7-15 |
| Ammonium (mg/L) | 1-5 |
| Phosphore total soluble | 10-12 |
| Phosphates (soluble) (mg/L) | 8-10 |
| Matières volatiles | 70-75 % des MS |

Le traitement d'hydrolyse thermique appliqué aux boues épaissies est le suivant :

| | |
|---|---|
| Température : | 175°C |
| Pression : | 15 bar |
| Rapport 02/DCO totale : | 0,1 |
| Temps de séjour : | 40 minutes |
| Volume du réacteur : | 400 litres |

Les boues épaissies après l'hydrolyse thermique présentent les caractéristiques suivantes :

| | |
|---|---|
| Matières sèches MS (g/L) | 35-50 |
| Matières en suspension MES (g/L) | 25-35 |
| DCO totale (mg 02/L) | 35000-50000 |
| DCO soluble (mg 02/L) | 12000-18000 |
| Azote total soluble (mg/L) | 900-12000 |
| Ammonium (mg/L) | 200-250 |
| Phosphore total soluble | 180-200 |
| Phosphates (soluble) (mg/L) | 160-180 |
| Matières volatiles | 60-65% des MS |

Des essais de séparation liquide/solide ont été réalisés en laboratoire. Il a été observé que les boues traitées thermiquement décantaient mal. Par conséquent la centrifugation a été retenue pour l'étape de séparation liquide/solide.

Les essais de centrifugation conduits en laboratoire, sans ajout de polymère, ont conduit à l'obtention d'un centrat (ou surnageant) présentant les caractéristiques suivantes :

| | |
|---|---|
| DCO totale (g 02/L) | 15,7 |
| DCO soluble (g 02/L) | 16,1 |
| Matières sèches (mg/L) | 14300 |
| Matières en suspension (mg/L) | 540 |

Après séparation, la phase solide contenant la grande majorité des matières en suspension est recyclée vers l'hydrolyse thermique.

Des tests de simulation de la recirculation ont été réalisés en laboratoire sur une petite autoclave de manière à solubiliser au maximum ces matières en suspension. Le protocole expérimental était le suivant :

- traitement thermique d'une boue épaissie (hydrolyse thermique 1);
- séparation liquide/solide par centrifugation ;

- traitement thermique de la phase solide (hydrolyse thermique 2) ;
- séparation liquide/solide par centrifugation ;
- traitement thermique de la phase solide (hydrolyse thermique 3) ;
- ...

La solubilisation des matières sèches a été observée après une succession de sept hydrolyses thermiques entre chacun desquels les boues ont subi une centrifugation.

Les résultats de solubilisation des matières en suspension sont les suivants :

|  | Solubilisation du traitement thermique n (%) | Solubilisation cumulée (%) |
|---|---|---|
| hydrolyse thermique 1 | 43 | 43 |
| hydrolyse thermique 2 | 19 | 56 |
| hydrolyse thermique 3 | 13 | 62 |
| hydrolyse thermique 4 | 8 | 65 |
| hydrolyse thermique 5 | 7 | 66 |
| hydrolyse thermique 6 | 6 | 68 |
| hydrolyse thermique 7 | 7 | 70 |

Avec :

$$\text{solubilisation du traitement thermique n (\%) = (DCO soluble de la boue traitée) / (DCO totale de la boue traitée),}$$

et,

$$\text{solubilisation cumulée (\%) = (DCO solubilisée après n traitement thermique) / (DCO totale de la boue épaissie initiale)}$$

De plus, des essais de traitement biologique ont été conduits en laboratoire sur la phase liquide issue de l'étape de séparation liquide/solide 6.

Ces essais ont été réalisés sur l'effluent suivant :

| | |
|---|---|
| Matières sèches MS (g/L) | 11,7 |
| Matières en suspension MES (g/L) | 0,61 |
| Matières volatiles MV (g/L) | 9,7 |
| Matières volatiles en suspension MVS (G/1) | 0,54 |
| DCO (g 02/L) | 15,5 |

Type de traitement biologique:

- Température : 30°C
- Type : méthanisation sur phase liquide
- pH : 6,7 à 7

Abattement de la DCO : 70 %

En conclusion, une telle filière selon l'invention permet de solubiliser de manière importante la DCO de la boue épaissie (>60%) pour ensuite abattre cette DCO soluble par l'intermédiaire de l'étape de digestion.

Les boues épaissies avant la filière avaient une concentration de 35-50 g/L de DCO totale et de 35-50 g/L de MS. Après la filière, l'effluent retourné en tête de station a une concentration de 4 à 5 g/L de DCO totale et de 5-6 g/L de MS.

Les matières en suspension n'ayant pas été solubilisées sont extraites de la filière au niveau du point de purge. Cette purge représente 20 à 40% des MS rentrant dans la filière. La réduction de production de boues est par conséquent supérieure à 60% en matières sèches.

On notera enfin qu'une étape d'ozonation peut être appliquée à la phase retournée par la canalisation 51 en tête de l'installation de traitement biologique dans l'eau, par exemple, pour décolorer l'eau.

L'essentiel des matières en suspension ayant été séparé de ce retour 51, la consommation d'ozone nécessaire au traitement sera considérablement inférieure à celle qu'aurait nécessitée le traitement de l'ensemble du retour des boues.

## Revendications

1. Procédé de traitement des boues en excès provenant d'au moins une installation de traitement d'épuration biologique d'effluents conduisant à la production de boues en excès, du type comprenant au moins une étape de solubilisation et au moins une étape de digestion desdites boues,
   **caractérisé en ce qu'**il comprend au moins une étape de séparation liquide/solide desdites boues solubilisées à l'issue de laquelle la fraction liquide subit au moins partiellement une étape de digestion avant d'être envoyée en amont dudit traitement biologique desdites effluents, tandis que la fraction solide des boues solubilisées est réacheminée vers ladite étape de solubilisation desdites boues.

2. Procédé selon la revendication 1, **caractérisé en ce qu'**il comprend une étape intermédiaire complémentaire de solubilisation de ladite fraction solide, en amont de l'envoi à ladite étape de solubilisation desdites boues par un moyen de solubilisation différent de celui utilisé pour ladite étape de solubilisation desdites boues.

3. Procédé selon la revendication 1 ou selon la revendication 2, **caractérisé en ce qu'**il comprend une étape d'épaississement ou de déshydratation desdites boues, en amont de ladite étape de solubilisation desdites boues.

4. Procédé selon la revendication 3, **caractérisé en ce que** la surverse de ladite étape d'épaississement est envoyée en amont dudit traitement biologique desdits effluents.

5. Procédé selon la revendication 3 ou selon la revendication 4, **caractérisé en ce que** ladite étape d'épaississement est réalisée avec ajout d'un polymère.

6. Procédé selon l'une quelconque des revendications 1 à 5, **caractérisé en ce que** ladite étape de solubilisation comprend au moins une des étapes appartenant au groupe suivant :

   - hydrolyse thermique oxydante ;
   - hydrolyse thermique non oxydante ;
   - hydrolyse chimique ;
   - hydrolyse enzymatique ;
   - hydrolyse biologique ;
   - traitement aux ultrasons ;
   - broyage ;
   - électroporation.

7. Procédé selon la revendication 6, **caractérisé en ce que** ladite étape d'hydrolyse thermique est conduite à une température comprise entre 50° C et 180° C et à une pression comprise entre 2 et 40 bar.

8. Procédé selon la revendication 7, **caractérisé en ce que** ladite étape d'hydrolyse thermique est conduite à une température d'environ 175° C et à une pression d'environ 15 bar.

9. Procédé selon la revendication 7 ou selon la revendication 8, **caractérisé en ce que** ladite étape d'hydrolyse thermique est effectuée pendant une durée comprise entre 10 et 180 minutes.

10. Procédé selon la revendication 9, **caractérisé en ce que** ladite hydrolyse thermique est effectuée pendant une durée d'environ 30 minutes.

11. Procédé selon l'une quelconque des revendications 6 à 10, **caractérisé en ce que** ladite étape d'hydrolyse thermique oxydante est réalisée à l'aide d'au moins un des agents oxydants appartenant au groupe suivant :

- l'air ;
- l'oxygène ;
- l'air enrichi en oxygène;
- le peroxyde d'hydrogène ;
- l'ozone.

12. Procédé selon l'une quelconque des revendications 1 à 11, **caractérisé en ce que** ladite étape de digestion est du type anaérobie.

13. Procédé selon l'une quelconque des revendications 1 à 11 **caractérisé en ce que** ladite étape de digestion est du type aérobie.

14. Procédé selon la revendication 12 ou selon la revendication 13, **caractérisé en ce que** ladite étape de digestion est du type mésophile.

15. Procédé selon la revendication 12 ou selon la revendication 13, **caractérisé en ce** ladite étape de digestion est du type thermophile.

16. Procédé selon l'une quelconque des revendications 12 à 15, **caractérisé en ce que** ladite étape de digestion est réalisée à l'aide de cultures libres et/ou fixées.

17. Procédé selon l'une quelconque des revendications 12 à 16, **caractérisé en ce que** ladite étape de digestion.est effectuée pendant une durée comprise entre 1 jour et 20 jours.

18. Procédé selon la revendication 17, **caractérisé en ce que** ladite étape de digestion est effectuée pendant une durée comprise entre 1 jour et 5 jours.

19. Procédé selon l'une quelconque des revendications 1 à 18, **caractérisé en ce que** ladite étape de séparation liquide/solide est réalisée par centrifugation, filtration, égouttage, décantation.

20. Procédé selon l'une quelconque des revendications 1 à 19, **caractérisé en ce que** ladite étape de séparation liquide/solide est réalisée avec ajout d'un floculant.

21. Procédé selon l'une quelconque des revendications 1 à 19, **caractérisé en ce que** ledit traitement biologique met en oeuvre un procédé biologique associé à une technique séparative à membranes.

22. Installation pour la mise en oeuvre d'un procédé selon l'une quelconque des revendications 1 à 21, comprenant une unité d'épuration biologique d'effluents (1), **caractérisée en ce qu'**elle comprend :

- au moins une unité de solubilisation (4) desdites boues;
- au moins une unité de séparation liquide/solide (6) en aval de ladite unité de solubilisation (4) ;
- au moins un digesteur (5),

et **en ce qu'**elle comprend :

- des moyens d'acheminement de la fraction liquide (61) issue de ladite unité de séparation liquide/solide vers ledit digesteur (5) ;
- des moyens d'acheminement de la fraction solide (621) issue de ladite unité de séparation liquide/solide vers ladite unité de solubilisation (4) desdites boues ;
- des moyens d'acheminement de ladite fraction liquide digérée (51) vers ladite unité de traitement biologique desdits effluents.

23. Installation selon la revendication 22, **caractérisée en ce que** ladite unité de séparation liquide/solide (6) comprend l'un au moins des moyens suivants :

- filtre presse ;

- centrifugeuse ;
- table ou vis d'égouttage ;
- membrane ;
- décanteur.

24. Installation selon l'une quelconque des revendications 22 et 23, **caractérisée en ce que** ladite unité de solubilisation (4) comprend au moins une unité d'hydrolyse thermique oxydante ou non.

25. Installation selon l'une quelconque des revendications 22 à 24, **caractérisée en ce que** ladite unité de solubilisation (4) comprend un réacteur agité.

26. Installation selon l'une quelconque des revendications 22 à 24, **caractérisée en ce que** ladite unité de solubilisation (4) comprend un réacteur non agité.

27. Installation selon l'une quelconque des revendications 22 à 26, **caractérisée en ce que** ledit digesteur (5) est du type à cultures fixées et/ou libres.

28. Installation selon l'une quelconque des revendications 22 à 27, **caractérisée en ce que** ledit digesteur (5) est du type à garnissage ordonné.

29. Installation selon l'une quelconque des revendications 22 à 27, **caractérisée en ce que** ledit digesteur (5) est du type à garnissage en vrac.

30. Installation selon la revendication 29, **caractérisée en ce que** ledit digesteur (5) est du type UASB à granules.

31. Installation selon l'une quelconque des revendications 22 à 30, **caractérisée en ce qu'**elle comprend au moins un épaississeur (7) desdites boues en amont de ladite unité de solubilisation.

32. Installation selon la revendication 31, **caractérisée en ce qu'**elle comprend des moyens d'acheminement de la surverse (72) dudit épaississeur (7) vers ladite unité d'épuration biologique (1) desdits effluents.

33. Installation selon l'une quelconque des revendications 22 à 32, **caractérisée en ce qu'**elle comprend une unité intermédiaire de solubilisation de ladite fraction solide; en amont de ladite unité de solubilisation desdites boues incluant un moyen de solubilisation différent de celui utilisé pour la solubilisation desdites boues.

34. Installation selon l'une quelconque des revendications 22 à 33, **caractérisée en ce qu'**elle inclut des moyens de séparation sur membranes (2').

35. Installation selon l'une quelconque des revendications 22 à 34 **caractérisée en ce qu'**elle comprend des moyens d'ozonation de la fraction liquide re-acheminée vers ladite unité de traitement biologique.


**Patentansprüche**

1. Verfahren zum Behandeln überschüssiger Schlämme von mindestens einer zur Erzeugung überschüssiger Schlämme führenden biologischen Abwasserkläranlage, von der Art, die mindestens einen Schritt der Solubilisierung und mindestens einen Schritt zur Verdauung dieser Schlämme umfasst,
**dadurch gekennzeichnet, dass** es mindestens einen Schritt zum Trennen von Flüssigkeit und Festteilen aus diesen solubilisierten Schlämmen gibt, an dessen Ende der flüssige Anteil zumindest teilweise einem Verdauungsschritt unterliegt, bevor er an eine vor der biologischen Abwässerbehandlung liegenden Stelle geleitet wird, während der feste Anteil der solubilisierten Schlämme zum Solubilisierungsschritt der besagten Schlämme zurückgeführt wird.

2. Verfahren nach Anspruch 1, **dadurch gekennzeichnet, dass** es einen zusätzlichen Zwischenschritt der Solubilisierung des erwähnten festen Anteils umfasst, oberhalb der Stelle, an der die Schlämme zum Solubilisierungsschritt abgeleitet werden, mit Hilfe eines anderen Solubilisierungsmittels als dem für den besagten Solubilisierungsschritt der Schlämme verwendete.

3. Verfahren nach Anspruch 1 oder 2, **dadurch gekennzeichnet, dass** es einen Schritt der Eindickung oder der Trocknung der besagten Schlämme oberhalb des Solubilisierungsschrittes dieser Schlämme umfasst.

4. Verfahren nach Anspruch 3, **dadurch gekennzeichnet, dass** der Überlauf des Eindickungsschrittes an eine Stelle oberhalb der biologischen Abwässerbehandlung geleitet wird.

5. Verfahren nach Anspruch 3 oder 4, **dadurch gekennzeichnet, dass** der Eindickungsschritt unter Zugabe eines Polymers ausgeführt wird.

6. Verfahren nach einem der Ansprüche 1 bis 5, **dadurch gekennzeichnet, dass** der Solubilisierungsschritt mindestens einen Schritt aus der folgenden Gruppe umfasst:

   - thermische, oxidierende Hydrolyse;
   - thermische, nicht oxidierende Hydrolyse;
   - chemische Hydrolyse;
   - enzymatische Hydrolyse;
   - biologische Hydrolyse;
   - Ultraschallbehandlung;
   - Zerkleinerung;
   - Elektroporation.

7. Verfahren nach Anspruch 6, **dadurch gekennzeichnet, dass** der Schritt der thermischen Hydrolyse bei einer Temperatur zwischen 50 °C und 180 °C und bei einem Druck zwischen 2 und 40 bar erfolgt.

8. Verfahren nach Anspruch 7, **dadurch gekennzeichnet, dass** der Schritt der thermischen Hydrolyse bei einer Temperatur von ca. 175 °C und einem Druck von ca. 15 bar erfolgt.

9. Verfahren nach Anspruch 7 oder 8, **dadurch gekennzeichnet, dass** der Schritt der thermischen Hydrolyse über eine Zeitdauer von 10 bis 180 Minuten abläuft.

10. Verfahren nach Anspruch 9, **dadurch gekennzeichnet, dass** die thermische Hydrolyse über eine Zeitdauer von etwa 30 Minuten abläuft.

11. Verfahren nach einem der Ansprüche 6 bis 10, **dadurch gekennzeichnet, dass** der Schritt der oxidierenden thermischen Hydrolyse mit Hilfe von mindestens einem der Oxidationsagenten aus folgender Gruppe erfolgt:

   - Luft;
   - Sauerstoff;
   - mit Sauerstoff angereicherter Luft;
   - Wasserstoffperoxyd;
   - Ozon.

12. Verfahren nach einem der Ansprüche 1 bis 11, **dadurch gekennzeichnet, dass** der Schritt zur Digestion anaerob ist.

13. Verfahren nach einem der Ansprüche 1 bis 11, **dadurch gekennzeichnet, dass** der Schritt zur Digestion aerob ist.

14. Verfahren nach Anspruch 12 oder 13, **dadurch gekennzeichnet, dass** der Schritt zur Digestion mesophil ist.

15. Verfahren nach Anspruch 12 oder 13, **dadurch gekennzeichnet, dass** der Schritt zur Digestion thermophil ist.

16. Verfahren nach Anspruch 12 bis 15, **dadurch gekennzeichnet, dass** der Schritt zur Digestion mit Hilfe freier oder festgelegter Kulturen erfolgt.

17. Verfahren nach einem der Ansprüche 12 bis 16, **dadurch gekennzeichnet, dass** der Schritt zur Digestion über eine Zeitdauer zwischen 1 Tag und 20 Tagen erfolgt.

18. Verfahren nach Anspruch 17, **dadurch gekennzeichnet, dass** der Schritt zur Digestion über eine Zeitdauer zwischen 1 Tag und 5 Tagen erfolgt.

**19.** Verfahren nach einem der Ansprüche 1 bis 18, **dadurch gekennzeichnet, dass** der Schritt zum Trennen der flüssigen und der festen Anteile durch Zentrifugation, Filterung, Abtropfen und Dekantieren erfolgt.

**20.** Verfahren nach einem der Ansprüche 1 bis 19, **dadurch gekennzeichnet, dass** der Schritt zum Trennen der flüssigen und der festen Anteile durch Zugabe eines Ausflockungsmittels erfolgt.

**21.** Verfahren nach einem der Ansprüche 1 bis 19, **dadurch gekennzeichnet, dass** die biologische Behandlung ein biologisches Verfahren einsetzt, das mit einer Trennungstechnik mittels Membranen arbeitet.

**22.** Anlage zum Einsetzen eines Verfahrens nach einem der Ansprüche 1 bis 21, das eine biologische Abwässerkläreinheit (1) umfasst, **dadurch gekennzeichnet dass** sie folgendes umfasst:

- mindestens eine Solubilisierungseinheit (4) für die besagten Schlämme;
- mindestens eine Einheit zum Trennen der flüssigen und festen Anteile (6), die sich hinter der Solubilisierungseinheit (4) befindet;
- mindestens einen Faulbehälter (5),

und **dadurch**, dass sie folgendes umfasst:

- Mittel zum Leiten des aus der Einheit zum Trennen der flüssigen und festen Anteile kommenden flüssigen Anteils (61) zum Faulbehälter (5);
- Mittel zum Leiten des aus der Einheit zum Trennen der flüssigen und festen Anteile kommenden festen Anteils (621) zu der Solubilisierungseinheit (4) der besagten Schlämme;
- Mittel zum Leiten des verdauten flüssigen Anteils (51) zur biologischen Behandlungseinheit für die besagten Abwässer.

**23.** Anlage nach Anspruch 22, **dadurch gekennzeichnet, dass** die Einheit zum Trennen der flüssigen und festen Anteile (6) mindestens eines der folgenden Mittel umfasst:

- eine Filterpresse;
- eine Zentrifuge;
- einen Tisch bzw. eine Schnecke zum Abtropfen;
- eine Membran;
- einen Dekantierer.

**24.** Anlage nach einem der Ansprüche 22 oder 23, **dadurch gekennzeichnet, dass** die Solubilisierungseinheit (4) mindestens eine Einheit zur oxidierenden oder nicht oxidierenden thermischen Hydrolyse umfasst.

**25.** Anlage nach einem der Ansprüche 22 bis 24, **dadurch gekennzeichnet, dass** die Solubilisierungseinheit (4) einen gerührten Reaktor umfasst.

**26.** Anlage nach einem der Ansprüche 22 bis 24, **dadurch gekennzeichnet, dass** die Solubilisierungseinheit (4) einen nicht gerührten Reaktor umfasst.

**27.** Anlage nach einem der Ansprüche 22 bis 26, **dadurch gekennzeichnet, dass** der Faulbehälter (5) von der Art ist, die mit festen und/oder freien Kulturen arbeitet.

**28.** Anlage nach einem der Ansprüche 22 bis 27, **dadurch gekennzeichnet, dass** die der Faulbehälter (5) von der Art mit geordneter Füllung ist.

**29.** Anlage nach einem der Ansprüche 22 bis 27, **dadurch gekennzeichnet, dass** der Faulbehälter (5) von der Art mit loser Füllung ist.

**30.** Anlage nach Anspruch 29, **dadurch gekennzeichnet, dass** der Faulbehälter (5) vom Typ UASB mit Körnchen ist.

**31.** Anlage nach einem der Ansprüche 22 bis 30, **dadurch gekennzeichnet, dass** sie mindestens eine Vorrichtung zum Eindicken (7) der besagten Schlämme oberhalb der Solubilisierungseinheit umfasst.

**32.** Anlage nach Anspruch 31, **dadurch gekennzeichnet, dass** sie Mittel zum Leiten des Überlaufs (72) der Vorrichtung zum Eindicken (7) zur biologischen Kläreinheit (1) der besagten Abwässer umfasst.

**33.** Anlage nach einem der Ansprüche 22 bis 32, **dadurch gekennzeichnet, dass** sie eine zwischenliegende Solubilisierungseinheit des besagten festen Anteils umfasst, die sich oberhalb der Solubilisierungseinheit der Schlämme befindet, welche ein anderes Solubilisierungsmittel als das zum Solubilisieren der besagten Schlämme verwendet.

**34.** Anlage nach einem der Ansprüche 22 bis 33, **dadurch gekennzeichnet, dass** sie Trennmittel über Membranen (2') aufweist.

**35.** Anlage nach einem der Ansprüche 22 bis 34, **dadurch gekennzeichnet, dass** sie über Mittel zum Ozonieren des zur biologischen Behandlungseinheit zurückgeleiteten flüssigen Anteils aufweist.

**Claims**

**1.** Process for treatment of excess sludges originating from at least one installation for the biological purification treatment of effluents leading to the production of excess sludges, of the type comprising at least one solubilisation step and at least one digestion step of the said sludges,
**characterised in that** it comprises at least one liquid / solid separation step of the said solubilised sludges after which the liquid fraction is at least partially subjected to a digestion step before being sent to the upstream side of the said biological treatment of the said effluents, while the solid fraction of the solubilised sludges is redirected to the said solubilisation step of the said sludges.

**2.** Process according to claim 1, **characterised in that** it includes an intermediate complementary solubilisation step of the said solid fraction, on the upstream side of where the said sludges are sent to the said solubilisation step, using a solubilisation means different from that used in the said solubilisation step of the said sludges.

**3.** Process according to claim 1 or to claim 2, **characterised in that** it includes a thickening or dehydration step of the said sludges on the upstream side of the said solubilisation step of the said sludges.

**4.** Process according to claim 3, **characterised in that** the overflow of the said thickening step is sent to the upstream side of the said biological treatment of the said effluents.

**5.** Process according to claim 3 or to claim 4, **characterised in that** the said thickening step is done with the addition of a polymer.

**6.** Process according to any one of claims 1 to 5, **characterised in that** the said solubilisation step includes at least one step in the following group:

- oxidising thermal hydrolysis;
- non-oxidising thermal hydrolysis;
- chemical hydrolysis;
- enzymatic hydrolysis;
- biological hydrolysis;
- ultrasound treatment;
- grinding;
- electroporation.

**7.** Process according to claim 6, **characterised in that** the said thermal hydrolysis step is carried out at a temperature of between 50°C and 180°C, and at a pressure of between 2 and 40 bars.

**8.** Process according to claim 7, **characterised in that** the said thermal hydrolysis step is carried out at a temperature of about 175°C and at a pressure of about 15 bars.

**9.** Process according to claim 7 or to claim 8, **characterised in that** the said thermal hydrolysis step is carried out for between 10 and 180 minutes.

**10.** Process according to claim 9, **characterised in that** the said thermal hydrolysis step is carried out for about 30 minutes.

**11.** Process according to any one of claims 6 to 10, **characterised in that** the said oxidising thermal hydrolysis step is done using at least one of the oxidising agents belonging to the following group:

- air;
- oxygen;
- air enriched with oxygen;
- hydrogen peroxide;
- ozone.

**12.** Process according to any one of claims 1 to 11, **characterised in that** the said digestion step is of the anaerobic type.

**13.** Process according to any one of claims 1 to 11, **characterised in that** the said digestion step is of the aerobic type.

**14.** Process according to claim 12 or 13, **characterised in that** the said digestion step is of the mesophilic type.

**15.** Process according to claim 12 or 13, **characterised in that** the said digestion step is of the thermophilic type.

**16.** Process according to any one of claims 12 to 15, **characterised in that** the said digestion step is advantageously performed using free and / or fixed cultures.

**17.** Process according to any one of claims 12 to 16, **characterised in that** the said digestion step is carried out for between 1 day and 20 days.

**18.** Process according to claim 17, **characterised in that** the said digestion step is carried out for between 1 day and 5 days.

**19.** Process according to any one of claims 1 to 18, **characterised in that** the said liquid / solid separation step is performed by centrifuging, filtration, dewatering, settlement.

**20.** Process according to any one of claims 1 to 19, **characterised in that** the said liquid / solid separation step is done with the addition of a flocculent.

**21.** Process according to any one of claims 1 to 19, **characterised in that** the said biological treatment uses a biological process associated with a separative membranes technique.

**22.** Installation for implementation of a process according to any one of claims 1 to 21, including a biological effluent (1) purification unit, **characterised in that** it comprises:

- at least one solubilisation unit (4) of the said sludges;
- at least one liquid / solid separation unit (6) on the downstream side of the said solubilisation unit (4);
- at least one digester (5),

and **in that** it comprises:

- means of routing the liquid fraction (61) output from the said liquid / solid separation unit, to the said digester (5);
- means of routing the solid fraction (621) output from the said liquid / solid separation unit to the said solubilisation unit (4) of the said sludges;
- means of routing the said digested liquid fraction (51) to the said biological treatment unit of the said effluents.

**23.** Installation according to claim 22, **characterised in that** the said liquid / solid separation unit (6) comprises at least one of the following means:

- press filter,
- centrifuge;
- dewatering table or screw;

- membrane;
- settlement tank.

24. Installation according to either claim 22 or 23, **characterised in that** the said solubilisation unit (4) comprises at least one oxidising or non-oxidising thermal hydrolysis unit.

25. Installation according to any one of claims 22 to 24, **characterised in that** the said solubilisation unit (4) comprises a stirred reactor.

26. Installation according to any one of claims 22 to 24, **characterised in that** the said solubilisation unit (4) comprises an unstirred reactor.

27. Installation according to any one of claims 22 to 26, **characterised in that** the said digester (5) is of the fixed and / or free culture type.

28. Installation according to any one of claims 22 to 27, **characterised in that** the said digester (5) is of the type with an ordered lining.

29. Installation according to any one of claims 22 to 27, **characterised in that** the said digester (5) is of the type with a bulk lining.

30. Installation according to claim 29, **characterised in that** the said digester (5) is of the UASB type with pellets.

31. Installation according to any one of claims 22 to 30, **characterised in that** it comprises at least one thickener (7) of the said sludges on the upstream side of the said solubilisation unit.

32. Installation according to claim 31, **characterised in that** it includes means of routing the overflow (72) from the said thickener (7) onto the said biological purification unit (1) of the said effluents.

33. Installation according to any one of claims 22 to 32, **characterised in that** it comprises an intermediate unit for solubilisation of the said solid fraction on the upstream side of the said solubilisation unit of the said sludges, including a solubilisation means different from that used for solubilisation of the said sludges.

34. Installation according to any one of claims 22 to 33, **characterised in that** it includes separation means on membranes (2').

35. Installation according to any one of claims 22 to 34, **characterised in that** it includes means for ozonation of the liquid fraction re-routed to the said biological treatment unit.

Fig. 1

Fig. 2

Fig. 3

Fig. 4